# FASCICULE DE BREVET EUROPEEN

(11) **EP 2 429 843 B1**
(45) Date de publication et mention de la délivrance du brevet: **17.04.2013**
(21) Numéro de dépôt: 10708282.8
(22) Date de dépôt: 04.02.2010
(51) Int. Cl.: B60H 1/00, F16L 55/02

(54) **BOUCLE DE CLIMATISATION D'UN VEHICULE AUTOMOBILE COMPORTANT UNE CHAMBRE D'EXPANSION DE VOLUME**
KRAFTFAHRZEUGKLIMAANLAGENZYKLUS MIT VOLUMENEXPANSIONSKAMMER
VEHICLE AIR CONDITIONING LOOP WITH A VOLUMIC EXPANSION CHAMBER

(30) Priorité: 13.05.2009 FR 0953148
(43) Date de publication de la demande: 21.03.2012
(73) Titulaire: Renault SAS, 92100 Boulogne Billancourt (FR); Hernandez-Garcia, Alfonso, 47002 Valladolid (ES)
(72) Inventeur: HERNANDEZ-GARCIA, Alfonso, 47002 Valladolid (ES); SANTIAGO-CASTRENO, Isaac, 47100 Tordesillas (ES)
(86) Numéro de dépôt international: PCT/FR2010/050182
(87) Numéro de publication internationale: WO 2010/130903

(56) Documents cités:
- EP-A- 1 864 838
- DE-A1-102004 008 287
- DE-A1-102006 037 443

## Description

La présente invention concerne une boucle de climatisation d'un véhicule automobile.

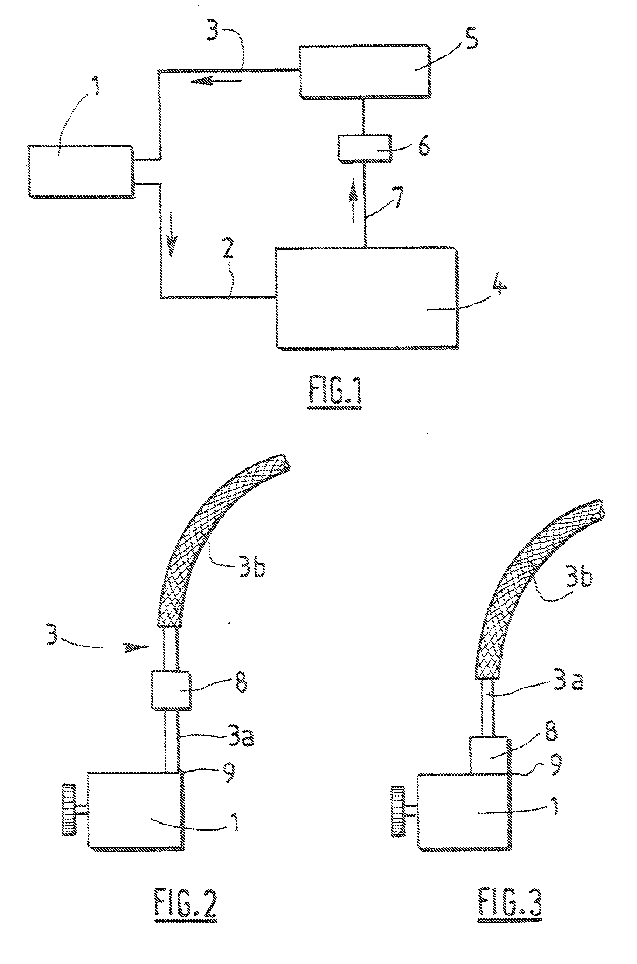

La boucle de climatisation d'un véhicule automobile comprend, comme montré par la figure 1, un compresseur 1 relié par des conduites 2, 3 à un condenseur 4 et à un évaporateur 5 qui diffuse de l'air refroidi dans l'habitacle du véhicule.

Un détendeur 6 est situé sur une conduite 7 qui relie le condenseur 4 à l'évaporateur 5.

Le compresseur 1 est entraîné par le moteur du véhicule.

Les conduites 2 et 3 comportent chacune une conduite rigide telle que 3a (voir figure 2) reliée à une conduite flexible telle que 3b.

Les conduites flexibles telles que 3b sont nécessaires pour éviter que les mouvements du compresseur 1 dus aux vibrations du moteur soient transmis au condenseur 4 et à l'évaporateur 5.

Cependant, le compresseur 1 génère lors de son fonctionnement des ondes de pression pulsées qui sont transmises vers le condenseur 4 et vers l'évaporateur 5 en créant des bruits susceptibles de nuire au confort des occupants du véhicule.

Les documents EP 1 589 274 et FR 2 860 854 ainsi que le document EP 1 864 838, considéré comme l'art antérieur le plus proche, décrivent des moyens pour atténuer les ondes de pression pulsées précitées.

Ces moyens d'atténuation comprennent de façon classique (voir figure 2) une chambre d'expansion de volume 8 située sur la conduite rigide 3a raccordée à l'entrée 9 du compresseur 1.

Cette chambre d'expansion de volume 8 est située sensiblement au milieu de la longueur de la conduite rigide 3a.

Cette position de la chambre d'expansion de volume 8 présente deux inconvénients :
- d'une part, cette position n'est pas optimale et ne permet pas d'atténuer efficacement les ondes de pression pulsées générées par le compresseur, et
- d'autre part, cette chambre d'expansion pose un problème d'encombrement dans l'environnement contraignant du compartiment moteur.

Le but de la présente invention est de remédier aux inconvénients ci-dessus.

Ce but est atteint, selon l'invention, grâce à une boucle de climatisation d'un véhicule automobile comprenant un compresseur relié par des conduites à un condenseur et à un évaporateur, ces conduites comportant chacune une conduite rigide reliée à une conduite flexible, une chambre d'expansion de volume pour atténuer les ondes de pression pulsées engendrées par le compresseur étant située entre le compresseur et l'une des conduites flexibles, caractérisée en ce que ladite chambre d'expansion de volume est reliée directement à l'entrée ou à la sortie du compresseur.

Il a été en effet constaté que lorsque la chambre d'expansion de volume était reliée directement à l'entrée ou à la sortie du compresseur, cette chambre d'expansion atténuait efficacement les ondes de pression pulsées générées par le compresseur.

De plus, la position de la chambre d'expansion en liaison directe avec le compresseur permet de résoudre le problème d'encombrement évoqué plus haut.

De préférence, ladite chambre d'expansion de volume est reliée directement à l'entrée basse pression du compresseur.

Cette disposition permet d'atténuer efficacement les bruits qui sont transmis vers l'habitacle via l'évaporateur.

De préférence également, la chambre d'expansion de volume est fixée de façon rigide au carter du compresseur.

Dans une version particulièrement avantageuse de l'invention, la chambre d'expansion de volume est intégrée sur la bride de raccordement d'une conduite rigide à l'entrée basse pression du compresseur.

La chambre d'expansion et la bride de raccordement peuvent être réalisées d'une seule pièce.

On obtient ainsi une pièce unique dont les coûts de fabrication et de montage sont réduits.

D'autres particularités et avantages de l'invention apparaîtront encore tout au long de la description ci-après.

Aux dessins annexés, donnés à titre d'exemples, non limitatifs :
- la figure 3 est une vue schématique montrant une chambre d'expansion de volume reliée directement à l'entrée du compresseur, conformément à l'invention,
- la figure 4 est une vue en perspective détaillée, montrant la chambre d'expansion raccordée directement au compresseur,
- la figure 5 est une vue en perspective montrant la chambre d'expansion intégrée avec la bride de fixation de la conduite rigide,
- la figure 6 est un diagramme montrant l'évolution du bruit en fonction de la fréquence.

La figure 3 montre schématiquement l'innovation apportée par l'invention, à savoir que la chambre d'expansion de volume 8 est raccordée directement à l'entrée 9 du compresseur 1.

Il s'agit ici de l'entrée basse pression qui est reliée à l'évaporateur 5 par la conduite rigide 3a et la conduite flexible 3b.

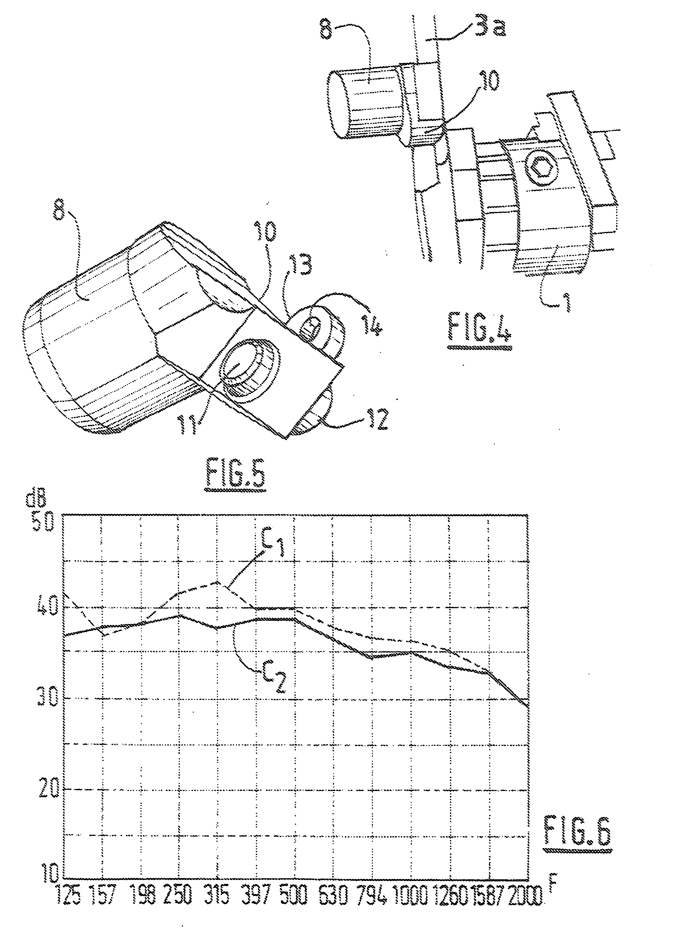

Come montré par la figure 4, la chambre d'expansion de volume 8 est fixée de façon rigide au carter du compresseur 1 et est, comme montré par la figure 5, intégrée sur la bride 10 de fixation de la conduite rigide 3a (non représentée sur la figure 5).

Cette bride 10 comporte une première ouverture 11 destinée à être reliée à la conduite rigide 3a et une seconde ouverture 12 située à 90° de la première ouverture 11 destinée à être reliée à l'entrée 9 du compresseur 8.

Cette seconde ouverture 12 débouche sur un raccord 13 comportant des trous, tels que 14 pour le passage d'une vis permettant de serrer le raccord 13 sur l'entrée 9 du compresseur 1.

Ainsi, le gaz frigorigène circulant entre l'évaporateur 5 et le compresseur 1 entre dans la chambre d'expansion de volume 8 par l'ouverture 11 et sort de cette chambre par l'ouverture 12 qui est raccordée au compresseur 1.

Le diagramme de la figure 6 montre l'évolution du bruit dB (décibels) mesuré à l'intérieur d'un véhicule, en fonction de la fréquence F en Hz (Hertz).

La courbe C1 en trait pointillé est relative au bruit mesuré en l'absence de chambre d'expansion de volume et la courbe C2 en trait continu est relative au bruit mesuré en présence d'une chambre d'expansion de volume 8 raccordée directement au compresseur 1.

On voit sur la figure 6 que sur pratiquement toute la gamme de fréquence le bruit mesuré en présence de la chambre d'expansion est plus faible que celui mesuré en l'absence d'une telle chambre d'expansion.

La chambre d'expansion de volume 8 peut être réalisée d'une seule pièce en métal ou en matière plastique.

Le fait que cette chambre d'expansion soit directement intégrée sur la bride de raccordement au compresseur permet d'obtenir un ensemble d'une seule pièce de faible dimension, c'est-à-dire parfaitement adaptée à l'environnement très encombré du compartiment moteur d'un véhicule automobile.

## Revendications

1. Boucle de climatisation d'un véhicule automobile comprenant un compresseur (1) relié par des conduites (2, 3) à un condenseur (4) et à un évaporateur (5), ces conduites (2, 3) comportant chacune une conduite rigide (3a) reliée à une conduite flexible (3b), une chambre d'expansion de volume (8) pour atténuer les ondes de pression pulsées engendrées par le compresseur (1) étant située entre le compresseur (1) et l'une des conduites flexibles (3b), **caractérisée en ce que** ladite chambre d'expansion de volume (8) est reliée directement à l'entrée (9) ou à la sortie du compresseur (1).

2. Boucle de climatisation selon la revendication 1, **caractérisée en ce que** ladite chambre d'expansion de volume (8) est reliée directement à l'entrée basse pression (9) du compresseur (1).

3. Boucle de climatisation selon l'une des revendications 1 ou 2, **caractérisée en ce que** la chambre d'expansion de volume (8) est fixée de façon rigide au carter du compresseur (1).

4. Boucle de climatisation selon l'une des revendications 2 ou 3, **caractérisée en ce que** la chambre d'expansion de volume (8) est intégrée sur la bride de raccordement (10) d'une conduite rigide (3a) à l'entrée basse pression (9) du compresseur (1).

5. Boucle de climatisation selon la revendication 4, **caractérisée en ce que** la chambre d'expansion (8) et la bride de raccordement (10) sont réalisées d'une seule pièce.

## Claims

1. Motor vehicle air-conditioning loop comprising a compressor (1) connected by pipes (2, 3) to a condenser (4) and to an evaporator (5), these pipes (2, 3) each comprising a rigid pipe (3a) connected to a flexible pipe (3b), a volume expansion chamber (8) for attenuating the pulsed pressure waves generated by the compressor (1) being located between the compressor (1) and one of the flexible pipes (3b), **characterized in that** said volume expansion chamber (8) is connected directly to the inlet (9) or to the outlet of the compressor (1).

2. Air-conditioning loop according to Claim 1, **characterized in that** said volume expansion chamber (8) is connected directly to the low-pressure inlet (9) of the compressor (1).

3. Air-conditioning loop according to either of Claims 1 and 2, **characterized in that** the volume expansion chamber (8) is fixed in a rigid manner to the casing of the compressor (1).

4. Air-conditioning loop according to either of Claims 2 and 3, **characterized in that** the volume expansion chamber (8) is integrated on the connection flange (10) of a rigid pipe (3a) at the low-pressure inlet (9) of the compressor (1).

5. Air-conditioning loop according to Claim 4, **characterized in that** the expansion chamber (8) and the connection flange (10) are produced in one piece.

## Patentansprüche

1. Kraftfahrzeug-Klimaanlagenkreislauf, der einen Kompressor (1), der durch Leitungen (2, 3) mit einem Kondensator (4) und einem Verdampfer (5) verbunden ist, wobei diese Leitungen (2, 3) jeweils eine mit einer flexiblen Leitung (3b) verbundene starre Leitung (3a) umfassen, eine Volumenexpansionskammer (8) zum Dämpfen der vom Kompressor (1) erzeugten gepulsten Druckwellen, die sich zwischen dem Kompressor (1) und einer der flexiblen Leitungen (3b) befindet, umfasst, **dadurch gekennzeichnet, dass** die Volumenexpansionskammer (8) mit dem Einlass (9) oder dem Auslass des Kompressors (1) direkt verbunden ist.

2. Klimaanlagenkreislauf nach Anspruch 1, **dadurch gekennzeichnet, dass** die Volumenexpansionskammer (8) mit dem Niederdruckeinlass (9) des Kompressors (1) direkt verbunden ist.

3. Klimaanlagenkreislauf nach Anspruch 1 oder 2, **dadurch gekennzeichnet, dass** die Volumenexpansionskammer (8) an dem Gehäuse des Kompressors (1) starr befestigt ist.

4. Klimaanlagenkreislauf nach Anspruch 2 oder 3, **dadurch gekennzeichnet, dass** die Volumenexpansionskammer (8) auf dem Verbindungsflansch (10) einer starren Leitung (3a) am Niederdruckeinlass (9) des Kompressors (1) integriert ist.

5. Klimaanlagenkreislauf nach Anspruch 4, **dadurch gekennzeichnet, dass** die Expansionskammer (8) und der Verbindungsflansch (10) einstückig ausgebildet sind.
